**Europäisches Patentamt**

**European Patent Office**

**Office européen des brevets**

(19)

(11) Numéro de publication: **0 133 831**
**B1**

(12)

# FASCICULE DE BREVET EUROPÉEN

(45) Date de publication du fascicule du brevet:
05.11.86

(51) Int. Cl.⁴: **C 03 B 23/11**

(21) Numéro de dépôt: **84401572.7**

(22) Date de dépôt: **26.07.84**

(54) **Perfectionnement apporté aux brûleurs équipant les machines destinées au traitement thermo-mécanique d'objets tels que notamment cannes de verre.**

(30) Priorité: **01.08.83 FR 8312628**

(43) Date de publication de la demande:
**06.03.85 Bulletin 85/10**

(45) Mention de la délivrance du brevet:
**05.11.86 Bulletin 86/45**

(84) Etats contractants désignés:
**AT BE CH DE GB IT LI NL**

(56) Documents cité:
**GB-A-571 310**
**GB-A-2 065 095**

(73) Titulaire: **SOCIETE FRANCAISE D'AMPOULES MECANIQUES Société dite:, Boulevard Victor Hugo, F-76390 Aumale (FR)**

(72) Inventeur: **Soulard, Dominique, Gauville, 80590 Lignières- Châtelain (FR)**

(74) Mandataire: **Armengaud, Charles, Cabinet ARMENGAUD AINE 3, Avenue Bugeaud, F-75116 Paris (FR)**

## Description

La présente invention se rapporte aux brûleurs équipant les machines destinées au traitement thermo-mécanique d'objets, tels que notamment, cannes de verre.

L'invention est destinée à s'appliquer plus particulièrement, mais bien entendu non exclusivement, aux brûleurs équipant les machines servant à obtenir, à partir de cannes de verre, des ampoules pharmaceutiques.

Dans ces sortes de machines, les cannes placées sur un carrousel défilent soit devant des chalumeaux baladeurs ou suiveurs, soit devant une couronne de brûleurs coaxiale au carrousel. Dans les machines connues du dernier genre considéré, la flamme des brûleurs est dirigée normalement à la ligne suivie par les cannes.

Conformément à l'invention, dans le but de réduire le nombre des brûleurs, ces derniers sont orientés obliquement par rapport à cette ligne.

Suivant une forme de réalisation de l'invention, les brûleurs inclinés sur la ligne sont munis d'ajutages étagés.

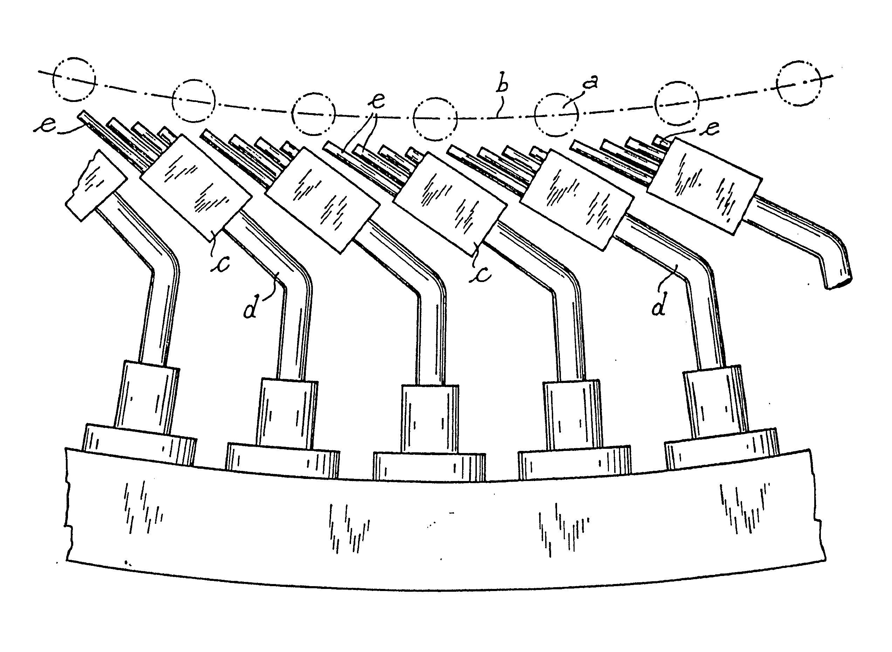

C'est une telle forme de réalisation, donnée uniquement à titre d'exemple que l'on va maintenant décrire en référence à la figure unique du dessin annexé.

Cet exemple se rapporte à une machine pour le traitement thermo-mécanique de cannes de verre a, pour les amener à la forme sous laquelle elles seront utilisées en tant qu'ampoules contenant des produits pharmaceutiques.

Ces cannes sont placées sur un carrousel. Elles suivent donc la ligne courbe b. En décrivant cette courbe elles passent devant une couronne de brûleurs tels que c dont la flamme va permettre d'exercer à l'endroit voulu de la canne, le traitement mécanique destiné à la formation de l'ampoule.

Conformément à l'invention, la flamme des brûleurs au lieu d'être, comme dans les machines connues, dirigée normalement à la ligne suivie par les cannes, est dirigée obliquement par rapport à cette ligne.

Dans l'exemple traité, le conduit d d'amenée du combustible au brûleur c est coudé de façon à permettre d'incliner le brûleur par rapport à la ligne b, ceci conformément à l'invention. Quant au brûleur il est muni d'ajutages e étagés dans le sens de son inclinaison par rapport à la ligne b.

Grâce à ces dispositions, suivant l'invention, toutes choses étant égales par ailleurs, la zone de chauffage de chaque canne est considérablement augmentée et l'on peut ainsi diminuer le nombre des brûleurs.

Le brûleur, au lieu d'être comme dans l'exemple choisi, rectangulaire, peut être de forme trapézoïdale, le grand côté du trapèze étant dirigé vers la ligne de progression des cannes. Dans ce cas, les ajutages sont remplacés par de simples orifices pratiqués dans le brûleur.

Le brûleur peut également être constitué par une couronne continue dont les ajutages sont orientés obliquement, conformément à l'invention, par rapport à ligne b.

## Revendications

1. Brûleur, équipant les machines destinées au traitement, notamment thermo-mécanique, d'objets tels que, plus particulièrement, cannes de verre, caractérisé en ce qu'il est orienté obliquement par rapport à la ligne suivie par ledits objets, tels que cannes de verre, dans la machine.

2. Brûleur suivant la revendication 1, caractérisé en ce qu'il est raccordé à un conduit (d) d'amenée de combustible, conformé de façon à réaliser l'orientation oblique du brûleur (c) par rapport à la ligne (b) suivie par les objets dans la machine.

3. Brûleur suivant l'une quelconque des revendications précédentes, caractérisé en qu'il est muni d'ajutages (e) étagés dans le sens voulu.

4. Brûleur suivant l'une quelconque des revendications 1 et 2, caractérisé en ce qu'il est de forme tranézoïdale, le grand côté du trapèze, dans lequel débouchent les orifices du brûleur, étant dirigé vers la ligne (b).

5. Bruûleur suivant la revendication 1, caractérisé en ce qu'il est constitué par une couronne continue dont les ajutages sont orientés obliquement par rapport à la ligne (b) suivie par les objets.

## Patentansprüche

1. Brenner für Geräte zur insbesondere thermomechanischen Behandlung von Gegenständen, wie insbesondere Rohren aus Glas, dadurch gekennzeichnet, daß der Brenner schräg zu der Linie gerichtet ist, der die Gegenstände, wie Glasrohre, in dem Gerät folgen.

2. Brenner nach Anspruch 1, dadurch gekennzeichnet, daß der Brenner mit einer Brennstoffzufuhrleitung (d) entsprechend der schrägen Ausrichtung des Brenners (c) bezüglich der Line (b) verbunden ist, der die Gegenstände in dem Gerät folgen.

3. Brenner nach einem der vorhergehenden Ansprüche, dadurch gekennzeichnet, daß der Brenner mit Mundstücken (e) in gewünschten Abstufungen versehen ist.

4. Brenner nach einem der Ansprüche 1 oder 2, dadurch gekennzeichnet, daß der Brenner trapezförmig ausgebildet ist, wobei die große Trapezseite, in welchem die Brenneröffnungen münden, gegen die Linie (b) gerichtet ist.

5. Brenner nach Anspruch 1, dadurch gekennzeichnet, daß der Brenner aus einem kontinuierlichen Kranz gebildet ist, wobei die Mundstücke schräg zur Linie (b) gerichtet sind, der die Gegenstände folgen.

## Claims

1. A burner for machines used in the treatment, especially thermo-mechanical, of objects such as, in particular, glass tubes, characterized in that it is oriented obliquely in relation to the line followed by the said objects, such as glass tubes, in the machine.

2. A burner according to claim 1, characterized in that it is connected to a fuel supply pipe (d) formed so as to effect the oblique orientation of the burner (c) in relation to the line (b) followed by the objects in the machine.

3. A burner according to either one of the preceding claims, characterized in that it is fitted with nozzles (e) stepped in the required direction.

4. A burner according to either one of claims 1 and 2, characterized in that it is trapezoid in form, the long side of the trapezium, in which are located the burner ports, being arranged facing the line (b).

5. A burner according to claim 1, characterized in that it comprises a continuous ring, the nozzles of which are oriented obliquely in relation to the line (b) followed by the objects.

b

a

e

e

e

e

c

d

c

d

0 133 831